# EUROPÄISCHE PATENTANMELDUNG

(11) **EP 3 372 811 A1**
(43) Veröffentlichungstag der Anmeldung: **12.09.2018**
(21) Anmeldenummer: 17160143.8
(22) Anmeldetag: 09.03.2017
(51) Int. Cl.: F02D 41/00, F02D 19/06

(54) **VERFAHREN ZUM BETREIBEN EINES GROSSDIESELMOTORS, SOWIE GROSSDIESELMOTOR**

(71) Anmelder: Winterthur Gas & Diesel AG, 8401 Winterthur (CH)
(72) Erfinder: Räss, Konrad, 8457 Humlikon (CH); WEBER, Markus F., 8472 Seuzach (CH); Robert Gläser, Robert, 8442 Hettlingen (CH)
(74) Vertreter: Intellectual Property Services GmbH

(57) **Zusammenfassung**

Es wird ein Verfahren zum Betreiben eines Grossdieselmotors vorgeschlagen, der mit zwei unterschiedlichen Brennstoffen betreibbar ist, der eine Mehrzahl von Zylindern (2) aufweist, und der einen ersten sowie einen zweiten Vorratsbehälter (61, 62) für jeweils einen der Brennstoffe umfasst, bei welchem Verfahren mindestens ein Zylinder (2) einer ersten Gruppe von Zylindern (2) zugeordnet wird, sowie mindestens ein Zylinder (2) einer zweiten Gruppe von Zylindern (2), und bei welchem der ersten Gruppe von Zylindern (2) ein erster Brennstoff aus dem ersten Vorratsbehälter (61) zugeführt wird, während der zweiten Gruppe von Zylindern (2) ein zweiter Brennstoff aus dem zweiten Vorratsbehälter (62) zugeführt wird. Ferner wird ein Betriebsverfahren sowie ein Grossdieselmotor vorgeschlagen, der nach einem solchen Verfahren betrieben wird.

## Beschreibung

Die Erfindung betrifft ein Verfahren zum Betreiben eines Grossdieselmotors, der mit zwei unterschiedlichen Brennstoffen betreibbar ist, ein Betriebsverfahren für einen Grossdieselmotor, sowie einen Grossdieselmotor, der mit diesem Verfahren betrieben wird.

Grossdieselmotoren, die als Zweitakt- oder als Viertakt-Maschinen ausgestaltet sein können, beispielsweise als längsgespülte Zweitakt-Grossdieselmotoren, werden häufig als Antriebsaggregate für Schiffe oder auch im stationären Betreib, z.B. zum Antrieb grosser Generatoren zur Erzeugung elektrischer Energie eingesetzt. Dabei laufen die Motoren in der Regel über beträchtliche Zeiträume im Dauerbetrieb, was hohe Anforderungen an die Betriebssicherheit und die Verfügbarkeit stellt. Daher sind für den Betreiber insbesondere lange Wartungsintervalle, geringer Verschleiss und ein wirtschaftlicher Umgang mit den Betriebsstoffen zentrale Kriterien.

Ein weiterer wichtiger Punkt ist seit einigen Jahren mit zunehmender Bedeutung die Qualität der Abgase, insbesondere die Stickoxid Konzentration in den Abgasen. Hier werden die rechtlichen Vorgaben und Grenzwerte für die entsprechenden Abgasgrenzwerte immer weiter verschärft. Das hat insbesondere bei Zweitakt-Grossdieselmotoren zur Folge, dass die Verbrennung des klassischen, mit Schadstoffen hoch belasteten Schweröls, aber auch die Verbrennung von Dieselöl oder anderen Brennstoffen problematischer wird, weil die Einhaltung der Abgasgrenzwerte immer schwieriger, technisch aufwändiger und damit teurer wird.

Die Aspekte des wirtschaftlichen Betriebs und der Einhaltung von Abgasgrenzwerten hat dazu geführt, dass man nach Alternativen bezüglich der verwendeten Brennstoffe in einem Grossdieselmotor sucht. Dabei ist es bekannt, Grossdieselmotoren mit zwei unterschiedlichen Brennstoffen zu betreiben, wobei der Motor je nach Betriebssituation oder Umgebung entweder mit dem einen Brennstoff oder mit dem anderen Brennstoff betrieben wird.

Eine bekannte Ausgestaltung eines Grossdieselmotors, der mit zwei unterschiedlichen Brennstoffen betrieben werden kann, ist der Motorentyp, für den heutzutage der Begriff "Dual-Fuel Motor" gebräuchlich ist. Diese Motoren sind einerseits in einem Gasmodus betreibbar, in welchem ein Gas, z.B. ein Erdgases wie LNG (liquefied natural gas), oder ein Gas in Form eines Autogases oder eines anderen zum Antrieb einer Brennkraftmaschine geeigneten Gases verbrannt wird, und andererseits in einem Flüssigmodus, in welchem ein geeigneter flüssiger Brennstoff wie Methanol, Benzin, Diesel, Schweröl oder andere geeignete flüssige Brennstoffe in demselben Motor verbrannt werden können. Die Grossdieselmotoren können dabei sowohl Zweitakt- als auch Viertaktmotoren sein, insbesondere auch längsgespülte Zweitakt-Grossdieselmotoren.

Mit dem Begriff "Grossdieselmotor" sind auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch diese genannten Dual-Fuel-Motoren und solche Grossmotoren, bei denen die Selbstzündung des Brennstoffs zur Fremdzündung eines anderen Brennstoffs genutzt wird.

Im Flüssigmodus wird üblicherweise der Brennstoff direkt in den Brennraum des Zylinders eingebracht und verbrennt dort nach dem Prinzip der Selbstzündung. Im Gasmodus ist es bekannt, nach dem Otto-Prinzip das Gas im gasförmigen Zustand mit der Spülluft zu vermischen, um so im Brennraum des Zylinders ein zündfähiges Gemisch zu erzeugen. Bei diesem Niederdruckverfahren erfolgt die Zündung des Gemisches im Zylinder üblicherweise, indem im richtigen Moment eine kleine Menge flüssiger Brennstoff in den Brennraum des Zylinders oder in eine Vorkammer eingespritzt wird, die dann zur Zündung des Luft-Gas-Gemisches führt. Ein solcher Dual-Fuel Motor kann während des Betriebs vom Gasmodus in den Flüssigmodus umgeschaltet werden und umgekehrt.

Es sind auch solche Grossdieselmotoren bekannt, die mit zwei unterschiedlichen flüssigen Brennstoffen betrieben werden können, wobei dabei üblicherweise beide Brennstoffe vorrätig sind, sodass der Motor auch während des Betriebs entweder mit dem ersten oder mit dem zweiten Brennstoff betreibbar ist. Zum Umschalten von dem einen auf den anderen Brennstoff ist es dabei bekannt, dass der Druckspeicher, z. B. der Akkumulator eines Common-Rail Brennstoff Systems, welcher die Einspritzvorrichtungen der Zylinder mit Brennstoff versorgt, von dem ersten Brennstofftank auf den zweiten Brennstofftank umgeschaltet wird. D.h. die Strömungsverbindung zwischen dem Druckspeicher und dem ersten Brennstofftank wird geschlossen bzw. unterbrochen, und gleichzeitig wird eine Strömungsverbindung zwischen dem zweiten Brennstofftank und dem Druckspeicher geöffnet, sodass der Druckspeicher nun mit dem zweiten Brennstoff gefüllt wird, der dann den Zylindern zugeführt wird. Auf diese Weise kann der Grossdieselmotor entweder mit dem ersten oder mit dem zweiten Brennstoff betrieben werden.

Um einen möglichst effizienten und wirtschaftlichen Betrieb des Grossdieselmotors zu ermöglichen, sind einige verschiedene flüssige Brennstoffe bekannt, bzw. entwickelt worden. Neben den klassischen flüssigen Brennstoffen für Grossdieselmotoren, wie beispielsweise Dieselöl, Methanol, Schweröl oder auch andere schwere Kohlenwasserstoffe, die insbesondere als Rückstände bei der Raffinerie übrig bleiben, werden auch Emulsionen oder Suspensionen als Brennstoffe für Grossdieselmotoren verwendet.

Als ein Beispiel seien hier die als MSAR (Multiphase Superfine Atomised Residue) bezeichneten Emulsionen genannt. Dies sind im Wesentlichen Emulsionen aus einem schweren Kohlenwasserstoff, z. B. Bitumen, Schweröl oder ähnliches, und Wasser, die in speziellen Verfahren hergestellt werden. Ein weiteres Beispiel sind Suspensionen, z. B. aus Kohlenstaub und Wasser, die ebenfalls als Brennstoff für Grossdieselmotoren eingesetzt werden.

Die Verwendung solch unterschiedlicher Brennstoffe in ein und demselben Grossdieselmotor bringt jedoch Probleme mit sich, weil diese Brennstoffe sich in ihren chemischen und physikalischen Eigenschaften stark unterscheiden. Zwar ist es in modernen, elektronisch gesteuerten Grossdieselmotoren möglich, einige Parameter, wie beispielsweise Einspritzbeginn, Einspritzdauer oder Ansteuerung der Gaswechselsystem, während des Betriebs zu verändern und damit an den jeweiligen Brennstoff anzupassen, aber bei anderen Komponenten ist dies nicht oder kaum möglich, sodass hier Kompromisse eingegangen werden müssen. Beispielsweise kann das tribologische System Kolben/Kolbenringe/Kolbenlauffläche nur sehr begrenzt, nämlich durch Änderung der Schmierung, angepasst werden. Auch die Einspritzdüsen stellen eine problematische Komponente dar, weil sehr abrasive Brennstoffe wie beispielsweise die genannten Kohlenstaub-Wasser Suspensionen zu einem sehr starken Verschleiss in den Einspritzdüsen oder auch in anderen Komponenten des Einspritzsystems führen können.

Insbesondere die Verwendung solcher kritischen Brennstoffe, die zwar bezüglich ihres Brennwerts oder ihrer Verbrennungseigenschaften sehr wirtschaftlich sein können, aber einen sehr hohen Verschleiss verursachen können, bringt eine Gefährdung der Betriebssicherheit des Grossdieselmotors mit sich, und kann somit auch die sichere Fahrt eines von einem solchen Motor angetriebenen Schiffs gefährden, insbesondere wenn der Motor über einen längeren Zeitraum mit einem solchen kritischen Brennstoff betrieben wird.

Zudem führt insbesondere der höhere Verschleiss zu einer Verkürzung der Lebensdauer der betroffenen Komponenten, wodurch kürzere Wartungsintervalle bzw. häufigere Service- und Instandhaltungsarbeiten oder Reparaturen vonnöten sind. Dies steht natürlich einem möglichst zuverlässigen und wirtschaftlichen Betrieb des Grossdieselmotors entgegen.

Ausgehend von diesem Stand der Technik ist es daher eine Aufgabe der Erfindung, ein Verfahren zum Betreiben eines Grossdieselmotors vorzuschlagen, der mit zwei unterschiedlichen Brennstoffen betreibbar ist, wobei das Verfahren einen zuverlässigen, sicheren, effizienten und umweltfreundlichen Betrieb des Grossdieselmotors ermöglichen soll. Ferner ist es eine Aufgabe der Erfindung, einen entsprechenden Grossdieselmotor vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also ein Verfahren zum Betreiben eines Grossdieselmotors vorgeschlagen, der mit zwei unterschiedlichen Brennstoffen betreibbar ist, der eine Mehrzahl von Zylindern aufweist, und der einen ersten sowie einen zweiten Vorratsbehälter für jeweils einen der Brennstoffe umfasst, bei welchem Verfahren mindestens ein Zylinder einer ersten Gruppe von Zylindern zugeordnet wird, sowie mindestens ein Zylinder einer zweiten Gruppe von Zylindern, und bei welchem der ersten Gruppe von Zylindern ein erster Brennstoff aus dem ersten Vorratsbehälter zugeführt wird, während der zweiten Gruppe von Zylindern ein zweiter Brennstoff aus dem zweiten Vorratsbehälter zugeführt wird.

Es wird also vorgeschlagen, dass der Grossdieselmotor gleichzeitig mit zwei unterschiedlichen Brennstoffen betrieben wird, in dem Sinne, dass in einem Teil der Zylinder, nämlich den Zylindern, welche der ersten Gruppe zugeordnet sind, der erste Brennstoff verbrannt wird, während zur gleichen Zeit in anderen Zylindern, nämlich denen, die der zweiten Gruppe zugeordnet sind, der zweite Brennstoff verbrannt wird. Es wird also nicht wie bei bekannten Lösungen, der gesamte Motor von einem ersten auf einen zweiten Brennstoff umgestellt, sondern der Motor wird simultan mit den beiden unterschiedlichen Brennstoffen betrieben.

Hierdurch wird es möglich, dass man beispielsweise gewisse Zylinder auswählt, die immer oder zumindest überwiegend der ersten Gruppe zugeordnet sind, also immer oder überwiegend mit dem ersten Brennstoff betrieben werden, oder man kann Zylinder auswählen, die immer oder überwiegend der zweiten Gruppe zugeordnet sind, also immer oder überwiegend mit dem zweiten Brennstoff betrieben werden.

Ist beispielsweise einer der beiden Brennstoffe kritischer im vorangehend beschriebenen Sinne, z. B. weil er einen deutlich höheren Verschleiss verursacht, so kann man einen oder mehrere Zylinder auswählen, die nicht oder nur sehr selten mit dem kritischeren Brennstoff betrieben werden. Diese Zylinder werden dann also quasi vor einem erhöhten Verschleiss geschont, wodurch sich zum einen die Betriebssicherheit und die Zuverlässigkeit des Grossdieselmotors erhöht, und wodurch zum anderen der Gesamtverschleiss und damit die benötigten Reparatur- oder Instandhaltungsarbeiten deutlich reduziert werden können.

Ist beispielsweise der Grossdieselmotor das Antriebsaggregat eines Schiffes und wird den Zylindern der zweiten Gruppe der kritischere zweite Brennstoff zugeführt, so bleibt das Schiff selbst bei einem kompletten Ausfall sämtlicher Zylinder der zweiten Gruppe noch manövrier- und fahrfähig, weil der Grossdieselmotor weiterhin mit den Zylindern der ersten Gruppe betrieben werden kann.

Ein weiterer wesentlicher Vorteil ist es, dass die Zylinder, die immer oder überwiegend der ersten Gruppe zugeordnet sind, für den ersten Brennstoff optimiert werden können, während die Zylinder, die immer oder überwiegend der zweiten Gruppe zugeordnet sind, für den zweiten Brennstoff optimiert werden können. Das bedeutet insbesondere, dass das tribologische System, welches aus dem Kolben, den Kolbenringen und der Lauffläche des Zylinders bzw. des Zylinderliners besteht, optimal an den ersten oder an den zweiten Brennstoff angepasst werden kann. So kann beispielsweise die Anzahl, die Geometrie, das Material oder die Beschichtung der Kolbenringe speziell für den ersten oder den zweiten Brennstoff angepasst werden. Auch die Dichtungen bzw. die Dichtungskonzepte im Kolben-Zylinder-System und unterhalb des Kolbens können für den ersten bzw. für den zweiten Brennstoff optimiert werden. Zudem ist es auch möglich, die Einspritzvorrichtungen, mit denen der jeweilige Brennstoff in den Zylinder eingespritzt wird, optimal an den ersten oder an den zweiten Brennstoff anzupassen, z. B. bezüglich Material oder Geometrie. Für einen stark abrasiven Brennstoff können beispielsweise Einspritzdüsen verwendet werden, die aus einem Material bestehen, welches besonders gute Beständigkeit gegenüber abrasiven oder anderweitig aggressiven Flüssigkeiten aufweist, oder die eine entsprechende Beschichtung aufweisen.

Bezüglich der Zuordnung der Zylinder in die erste Gruppe oder in die zweite Gruppe sind zahlreiche Varianten möglich. Falls der Grossdieselmotor mit allen Zylindern betrieben wird, wird jeder Zylinder entweder der ersten Gruppe oder der zweiten Gruppe zugeordnet. Wird der Grossdieselmotor nicht mit allen Zylindern betrieben, beispielsweise, weil nicht alle Zylinder für die zu erbringende Leistung benötigt werden oder ein Betrieb mit reduzierter Zylinderzahl wirtschaftlicher ist, so gehören die nicht verwendeten Zylinder keiner Gruppe an. Die jeweils aktuelle Anzahl der Zylinder, welche der ersten oder der zweiten Gruppe zugeordnet sind, kann also zumindest zeitweilig kleiner sein als die Gesamtanzahl der Zylinder des Grossdieselmotors.

Es versteht sich, dass das erfindungsgemässe Verfahren auch mit anderen, bekannten Betriebsverfahren kombinierbar ist. Das heisst, das erfindungsgemässe gleichzeitige Betreiben des Grossdieselmotors mit zwei unterschiedlichen Brennstoffen muss nicht ständig verwendet werden. Es ist beispielsweise durchaus auch möglich, den Grossdieselmotor zeitweise nur mit einem der beiden Brennstoffe zu betreiben. Das erfindungsgemässe Verfahren kann also insbesondere auch nur zeitweise verwendet werden, in dem Sinne, dass der Grossdieselmotor zeitweise nur mit dem ersten oder nur mit dem zweiten Brennstoff betrieben wird und zeitweise gemäss dem erfindungsgemässen Verfahren mit beiden Brennstoffen gleichzeitig. Dies wird weiter hinten noch anhand eines Betriebsverfahrens erläutert.

Eine Variante der Zuordnung der Zylinder zu der ersten oder der zweiten Gruppe besteht darin, dass man jeden Zylinder des Grossdieselmotors fix einer Gruppe zuordnet, das heisst, die Zuordnung der Zylinder zu der ersten Gruppe bzw. zu der zweiten Gruppe bleibt während des Betriebs des Grossdieselmotors unverändert. Hat der Grossdieselmotor beispielsweise insgesamt zwölf Zylinder, so können z.B. sechs Zylinder der ersten Gruppe und die sechs anderen Zylinder der zweiten Gruppe fest zugeordnet werden. Natürlich müssen die erste und die zweite Gruppe nicht gleich viele Zylinder enthalten.

Eine andere Variante besteht darin, dass die Zuordnung zu der ersten Gruppe bzw. zu der zweiten Gruppe für mindestens einen Zylinder während des Betriebs des Grossdieselmotors verändert wird. Bei dieser Variante ist also die Zuordnung der Zylinder zu der ersten oder zu der zweiten Gruppe nicht fixiert, sondern wird während des Betriebs geändert, beispielsweise weil andere Abgasbedingungen erfüllt werden müssen.

Eine weitere Variante besteht darin, dass man einige Zylinder fest der ersten Gruppe zuordnet, oder einige Zylinder fest der zweiten Gruppe, und einige Zylinder wahlweise zeitweilig der ersten Gruppe und zeitweilig der zweiten Gruppe zuordnet. Bei einem Grossdieselmotor mit zwölf Zylindern können beispielsweise vier Zylinder fest der ersten Gruppe zugeordnet werden, vier andere Zylinder fest der zweiten Gruppe, und die verbleibenden vier Zylinder werden während des Betriebs je nach Bedarf zwischen der ersten und der zweiten Gruppe aufgeteilt, wobei diese Aufteilung dann natürlich nicht fixiert sein muss.

Aus Sicherheitsgründen ist es besonders bevorzugt, wenn jeder Zylinder jeweils mit jedem der beiden Brennstoffe versorgt werden kann. Somit ist es beispielsweise in aussergewöhnlichen Betriebssituationen oder in Notfällen möglich, dass z. B. Zylinder, welche eigentlich fix der ersten Gruppe zugeordnet sind, zumindest vorübergehend der zweiten Gruppe zugeordnet werden, also mit dem zweiten Brennstoff betrieben werden. Daher ist es bevorzugt, wenn jeder der Zylinder wahlweise aus dem ersten Vorratsbehälter oder aus dem zweiten Vorratsbehälter versorgt werden kann.

Bei Grossdieselmotoren ist es heutzutage eine übliche Massnahme, dass für die Brennstoffzuführung ein Common-Rail-System vorgesehen ist. Dieses umfasst typischerweise einen auch als Akkumulator bezeichneten Druckspeicher, in welchem der Brennstoff unter Druck vorrätig ist, und welcher aus dem Vorratsbehälter mit Brennstoff versorgt wird. Aus dem Druckspeicher wird dann der Brennstoff den Zylindern zugeführt. Vorzugsweise ist auch bei dem erfindungsgemässen Verfahren ein erster Druckspeicher vorgesehen, dem aus dem ersten Vorratsbehälter der erste Brennstoff zugeführt wird, oder ein zweiter Druckspeicher, dem aus dem zweiten Vorratsbehälter der zweite Brennstoff zugeführt wird, wobei der ersten Gruppe von Zylindern der erste Brennstoff aus dem ersten Druckspeicher zugeführt wird, oder der zweiten Gruppe von Zylindern der zweite Brennstoff aus dem zweiten Druckspeicher zugeführt wird.

Gemäss eines Ausführungsbeispiels umfasst jeder Zylinder eine Einspritzvorrichtung zum Einbringen von Brennstoff in den Zylinder, wobei die jeweilige Einspritzvorrichtung aus dem ersten Vorratsbehälter gespeist wird, falls der zugehörige Zylinder der ersten Gruppe zugeordnet ist, oder aus dem zweiten Vorratsbehälter gespeist wird, falls der zugehörige Zylinder der zweiten Gruppe zugeordnet ist. Bei diesem Ausführungsbeispiel wird also an jedem Zylinder die gleiche Einspritzvorrichtung für das Einbringen des ersten und für das Einbringen des zweiten Brennstoffs in den Brennraum des jeweiligen Zylinders verwendet.

Wie bereits erläutert, sind vorzugsweise die Zylinder der ersten Gruppe an den ersten Brennstoff angepasst.

Ebenso ist es bevorzugt, wenn die Zylinder der zweiten Gruppe an den zweiten Brennstoff angepasst sind.

Gemäss einem weiteren Ausführungsbeispiel wird der erste Brennstoff mit einer ersten Einspritzvorrichtung in den Zylinder eingebracht, und der zweite Brennstoff wird mit einer zweiten Einspritzvorrichtung in den Zylinder eingebracht. Da somit am Zylinder jeweils zwei Einspritzvorrichtungen vorgesehen sind, kann die erste Einspritzvorrichtung für den ersten Brennstoff optimiert werden, während die zweite Einspritzvorrichtung für den zweiten Brennstoff optimiert ist. Dies ist insbesondere - aber nicht nur - vorteilhaft, wenn einer der Brennstoffe ein flüssiger Brennstoff ist und einer der Brennstoffe ein gasförmiger.

Gemäss einer Ausführungsform wird der Grossdieselmotor mit zwei unterschiedlichen flüssigen Brennstoffen betrieben, beispielsweise mit Dieselöl und mit MSAR.

Auch ist es bevorzugt, wenn einer der Brennstoffe ein gasförmiger Brennstoff ist.

Wie bereits erwähnt, kann das erfindungsgemässe Verfahren auch mit anderen Verfahren kombiniert werden.

Durch die Erfindung wird daher ferner ein Betriebsverfahren für einen Grossdieselmotor vorgeschlagen, bei welchem der Grossdieselmotor in einem ersten Betriebsmodus oder in einem zweiten Betriebsmodus betrieben wird, wobei während des Betriebs des Grossdieselmotors vom ersten in den zweiten Betriebsmodus gewechselt wird, oder vom zweiten in den ersten Betriebsmodus gewechselt wird, und wobei
der Grossdieselmotor im ersten Betriebsmodus mit einem erfindungsgemässen Verfahren betrieben wird, und im zweiten Betriebsmodus
- der ersten Gruppe kein Zylinder zugeordnet wird, oder
- der zweiten Gruppe kein Zylinder zugeordnet wird, oder
- keiner der beiden Gruppen ein Zylinder zugeordnet wird, und mindestens in einem Zylinder der Kolben durch Beaufschlagung mit einem unter Druck stehenden Fluid, insbesondere Druckluft, bewegt wird.

Während der Grossdieselmotor also im ersten Betriebsmodus mit einem erfindungsgemässen Verfahren betrieben wird, umfasst der zweite Betriebsmodus drei Varianten. Bei der ersten Variante wird der ersten Gruppe kein Zylinder zugeordnet, das heisst, der Grossdieselmotor wird nur mit dem zweiten Brennstoff betrieben, wobei natürlich nicht alle Zylinder mit dem zweiten Brennstoff versorgt werden müssen. Es können auch ein Zylinder oder mehrere Zylinder gar nicht mit Brennstoff versorgt werden. Bei der zweiten Variante wird der zweiten Gruppe kein Zylinder zugeordnet, das heisst, der Grossdieselmotor wird nur mit dem ersten Brennstoff betrieben, wobei natürlich nicht alle Zylinder mit dem ersten Brennstoff versorgt werden müssen. Es können auch ein Zylinder oder mehrere Zylinder gar nicht mit Brennstoff versorgt werden. Bei der dritten Variante wird keiner der beiden Gruppen, also weder der ersten Gruppe noch der zweiten Gruppe, ein Zylinder zugeordnet. Das bedeutet, dass keinem der Zylinder Brennstoff zugeführt wird. Dafür wird mindestens in einem Zylinder der Kolben durch Beaufschlagung mit einem unter Druck stehenden Fluid, beispielsweise Druckluft, bewegt. Der Kolben wird also ohne Verbrennung im Zylinder bewegt.

Üblicherweise wird dieses Bewegen des Kolbens mittels Druckluft (die auch als "Startluft" bezeichnet wird) zum Starten des Grossdieselmotors verwendet. Daher ist Druckluft bei einem Grossdieselmotor stets vorrätig bzw. kann sie mit dafür vorgesehenen Kompressoren erzeugt werden.

Im zweiten Betriebsmodus ist es also möglich, den Grossdieselmotor nur mit Druckluft, also ohne eigentlichen Verbrennungsprozess, zu betreiben. Dieser reine Luftbetrieb des Grossdieselmotors eignet sich insbesondere für den Manövrierbetrieb eines von dem Grossdieselmotor angetriebenen Schiffes, beispielsweise in einem Hafen. Der Grossdieselmotor kann dann emissionsfrei betrieben werden und das Schiff dennoch bewegen. Dadurch kann beispielsweise die Anzahl der Schleppschiffe reduziert werden, die im Hafenbereich vorgeschrieben sind, wenn das Schiff bewegt wird.

Durch die Erfindung wird ferner ein Grossdieselmotor vorgeschlagen, welcher mit einem erfindungsgemässen Verfahren oder mit einem erfindungsgemässen Betriebsverfahren betrieben wird.

In einer bevorzugten Ausführungsform ist der Grossdieselmotor zur Verbrennung eines Gases und zur Verbrennung eines flüssigen Brennstoffs ausgestaltet, insbesondere als ein solcher "Dual-Fuel Motor" wie er vorangehend beschrieben ist.

Gemäss einer besonders bevorzugten Ausführungsform ist der Grossdieselmotor als längsgespülter Zweitakt-Grossdieselmotor ausgestaltet.

Weitere vorteilhafte Massnahmen und Ausgestaltungen der Erfindung ergeben sich aus den abhängigen Ansprüchen.

Im Folgenden wird die Erfindung sowohl in apparativer als auch in verfahrenstechnischer Hinsicht anhand von Ausführungsbeispielen und anhand der Zeichnung näher erläutert. In der Zeichnung zeigen:
- Fig. 1:: eine schematische Darstellung eines ersten Ausführungsbeispiels eines erfindungsgemässen Grossdieselmotors zur Durchführung eines ersten Ausführungsbeispiels eines erfindungsgemässen Verfahrens, und
- Fig.2:: eine schematische Darstellung eines zweiten Ausführungsbeispiels eines erfindungsgemässen Grossdieselmotors zur Durchführung eines zweiten Ausführungsbeispiels eines erfindungsgemässen Verfahrens.

Bei der folgenden Beschreibung der Erfindung wird mit beispielhaftem Charakter auf den für die Praxis besonders wichtigen Fall eines Grossdieselmotors Bezug genommen, der als längsgespülter Zweitakt-Grossdieselmotor ausgestaltet ist, und der als Hauptantriebsaggregat eines Schiffes verwendet wird. Natürlich ist die Erfindung nicht auf diesen Typ von Grossdieselmotor und auf diese Verwendung beschränkt, sondern betrifft Grossdieselmotoren im Allgemeinen. Der Grossdieselmotor kann beispielsweise auch als Viertakt-Motor ausgestaltet sein. Wie eingangs bereits erläutert, sind im Rahmen dieser Anmeldung mit dem Begriff "Grossdieselmotor" auch solche Grossmotoren gemeint, die ausser im Dieselbetrieb, der durch die Selbstzündung des Brennstoffs gekennzeichnet ist, auch in einem Ottobetrieb, der durch die Fremdzündung des Brennstoffs gekennzeichnet ist, oder in Mischformen aus diesen beiden betrieben werden kann. Ferner umfasst der Begriff Grossdieselmotor insbesondere auch diejenigen eingangs erläuterten Dual-Fuel-Motoren, die einerseits in einem Gasmodus betreibbar sind, in welchem ein Gas, z.B. ein Erdgas, verbrannt wird, und andererseits in einem Flüssigmodus, in welchem ein geeigneter flüssiger Brennstoff wie Methanol, Benzin, Diesel, Schweröl oder andere geeignete flüssige Brennstoffe verbrannt wird.

Das erfindungsgemässe Verfahren betrifft solche Grossdieselmotoren, die mit mindestens zwei unterschiedlichen Brennstoffen betreibbar sind. Dabei ist es insbesondere möglich, dass beide Brennstoffe flüssige Brennstoffe sind, oder dass einer der Brennstoffe flüssig ist und der andere Brennstoff gasförmig. Auch ist es möglich, dass der Grossdieselmotor mit mehr als zwei unterschiedlichen Brennstoffen betreibbar ist, beispielsweise mit zwei unterschiedlichen flüssigen Brennstoffen und mit einem gasförmigen Brennstoff.

Als gasförmige Brennstoffe eignen sich alle an sich bekannten Gase, welche als Brennstoffe in Grossdieselmotoren eingesetzt werden, insbesondere Erdgase wie LNG (liquefied natural gas). Als flüssige Brennstoffe eignen sich alle an sich bekannte flüssige Brennstoffe, welche zum Betreiben von Grossdieselmotoren verwendet werden, insbesondere Schweröl, Diesel, Methanol, Emulsionen wie beispielsweise MSAR (Multiphase Superfine Atomised Residue), oder Suspensionen wie beispielsweise Kohlenstaub-Wasser-Suspensionen. MSAR bezeichnet dabei Emulsionen, die im Wesentlichen aus einem schweren Kohlenwasserstoff, z. B. Bitumen, Schweröl oder ähnliches, und Wasser bestehen.

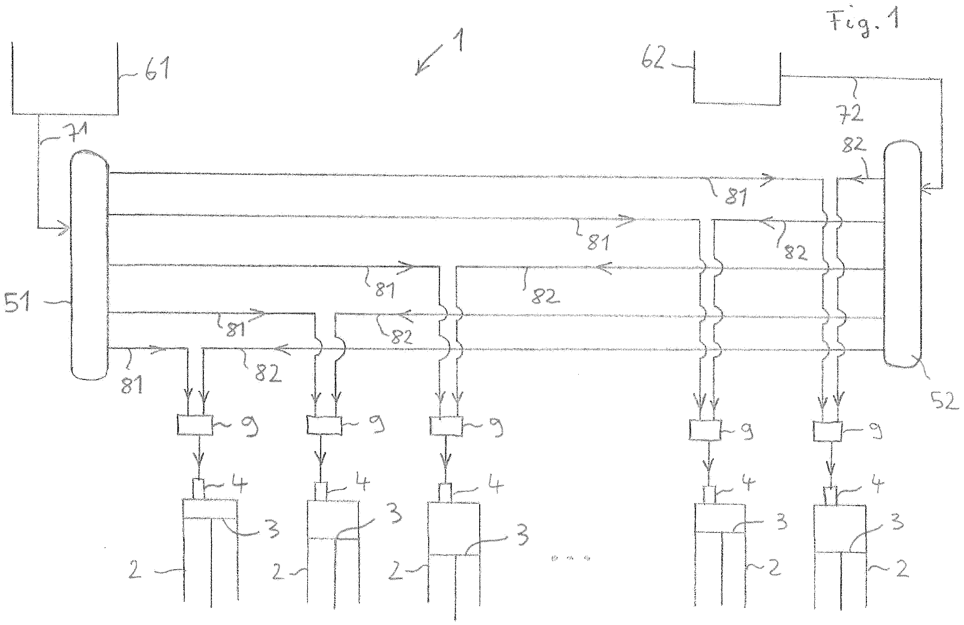

Fig. 1 zeigt in einer schematischen Darstellung ein erstes Ausführungsbeispiel eines Grossdieselmotors, der gesamthaft mit dem Bezugszeichen 1 bezeichnet ist, und welcher als längsgespülter Zweitakt-Grossdieselmotor ausgestaltet ist. Dieses Ausführungsbeispiel ist insbesondere für solche Anwendungen geeignet, bei welchen der Grossdieselmotor 1 mit zwei unterschiedlichen flüssigen Brennstoffen betrieben wird.

Der Grossdieselmotor 1 umfasst in an sich bekannter Weise eine Mehrzahl von Zylindern 2, beispielsweise sechs bis zwölf Zylinder oder noch mehr, wobei in jedem Zylinder 2 ein Kolben 3 vorgesehen ist, der jeweils zwischen einem oberen und einem unteren Totpunkt hin- und her bewegbar angeordnet ist, und dessen Oberseite gemeinsam mit dem Zylinderdeckel einen Brennraum begrenzt. In den Brennraum wird mittels einer Einspritzvorrichtung 4 ein Brennstoff eingespritzt. Dazu umfasst die Einspritzvorrichtung 4 für jeden Zylinder 2 mindestens eine, üblicherweise aber mehrere Einspritzdüsen zum Einspritzen des Brennstoffs in den Brennraum. Insbesondere beim Verwenden von flüssigen Brennstoffen sind die Einspritzdüsen üblicherweise im Zylinderdeckel angeordnet. Für gasförmige Brennstoffe ist es auch bekannt, die Einspritzdüsen in der seitlichen Zylinderwand vorzusehen beispielsweise auf einer Höhe, die etwa in der Mitte zwischen dem oberen und dem unteren Totpunkt des Kolbens liegt.

Der Aufbau und die einzelnen Komponenten des Grossdieselmotors 1, wie beispielsweise Einzelheiten des Einspritzsystems, das Gaswechselsystem, das Abgassystem oder das Turboladersystem für die Bereitstellung der Spül-bzw. Ladeluft, sowie das Kontroll- und Steuerungssystem für einen Grossdieselmotor 1 sind dem Fachmann sowohl für die Ausgestaltung als Zweitaktmotor als auch für die Ausgestaltung als Viertaktmotor hinlänglich bekannt und bedürfen daher hier keiner weiteren Erläuterung.

Bei dem hier beschriebenen ersten Ausführungsbeispiel eines längsgespülten Zweitakt-Grossdieselmotors 1 sind üblicherweise im unteren Bereich eines jeden Zylinders 2 bzw. Zylinderliners Spülluftschlitze vorgesehen, die durch die Bewegung des Kolbens 3 im Zylinder periodisch verschlossen und geöffnet werden, sodass die von dem Turbolader unter einem Ladedruck bereitgestellte Spülluft durch die Spülluftschlitze in den Zylinder 2 einströmen kann, solange diese geöffnet sind. Im Zylinderdeckel ist ein meistens zentral angeordnetes Auslassventil (nicht dargestellt) vorgesehen, durch welches die Verbrennungsgase nach dem Brennprozess aus dem Zylinder 2 in das Abgassystem ausgetragen werden können.

Das Kontroll- und Steuerungssystem ist in modernen Grossdieselmotoren ein elektronisches System, mit welchem sich üblicherweise alle Motor- oder Zylinderfunktionen, insbesondere die Einspritzung (Beginn und Ende der Einspritzung) und die Betätigung des Auslassventils, steuern bzw. regeln lassen.

Bei dem in Fig. 1 dargestellten Ausführungsbeispiel ist für jeden Zylinder 2 jeweils genau eine Einspritzvorrichtung 4 vorgesehen. Die an dem jeweiligen Zylinder 2 vorgesehene Einspritzvorrichtung 4 kann dabei natürlich jeweils eine Mehrzahl von Einspritzdüsen umfassen, mit denen der erste oder der zweite Brennstoff in den Brennraum des jeweiligen Zylinders 2 eingespritzt wird.

Zur Versorgung der Einspritzvorrichtungen 4 sind in dem Grossdieselmotor 1 ein erster Druckspeicher 51 für einen ersten Brennstoff und ein zweiter Druckspeicher 52 für einen zweiten Brennstoff vorgesehen, welcher von dem ersten Brennstoff verschieden ist. Die Druckspeicher 51, 52 sind vorzugsweise Bestandteil eines Common Rail Einspritzsystems.

Ferner ist ein erster Vorratsbehälter 61, beispielsweise ein Tank, für den ersten Brennstoff vorgesehen, welcher mit dem ersten Druckspeicher 51 über eine erste Versorgungsleitung 71 verbunden ist, sodass der erste Druckspeicher 51 aus dem ersten Vorratsbehälter 61 mit dem ersten Brennstoff versorgt werden kann. In der ersten Versorgungsleitung 71 ist in an sich bekannter Weise eine nichtdargestellte Pumpvorrichtung vorgesehen, um den ersten Brennstoff unter einem Betriebsdruck in dem ersten Druckspeicher 51 bereitzustellen.

Ferner ist ein zweiter Vorratsbehälter 62, beispielsweise ein Tank, für den zweiten Brennstoff vorgesehen, welcher mit dem zweiten Druckspeicher 52 über eine zweite Versorgungsleitung 72 verbunden ist, sodass der zweite Druckspeicher 52 aus dem ersten Vorratsbehälter 62 mit dem zweiten Brennstoff versorgt werden kann. In der zweiten Versorgungsleitung 72 ist in an sich bekannter Weise eine nichtdargestellte Pumpvorrichtung vorgesehen, um den zweiten Brennstoff unter einem Betriebsdruck in dem zweiten Druckspeicher 52 bereitzustellen.

Es ist natürlich auch möglich, dass in dem Grossdieselmotor 1 kein erster Druckspeicher 51 oder kein zweiter Druckspeicher 52 vorgesehen ist, sondern, dass die Einspritzvorrichtungen 4 von einer oder mehreren Brennstoffeinspritzpumpen, Hochdruckpumpen oder anderen Druckerzeugern versorgt werden, welche den jeweiligen Brennstoff aus dem ersten bzw. dem zweiten Vorratsbehälter 61 bzw. 62 auf den Betriebsdruck bringen, der für die Einspritzung mittels der Einspritzvorrichtungen 4 benötigt wird. Diese Druckerzeuger stellen den jeweiligen Brennstoff dann den Einspritzvorrichtungen mit dem benötigten Betriebsdruck zur Verfügung

Die Einspritzvorrichtung 4 jedes Zylinders 2 ist jeweils sowohl mit dem ersten Druckspeicher 51 bzw. mit dem ersten Vorratsbehälter 61 als auch mit dem zweiten Druckspeicher 52 bzw. dem zweiten Vorratsbehälter 62 verbunden, sodass jede Einspritzvorrichtung 4 - und damit jeder Zylinder 2 - mit dem ersten Brennstoff aus dem ersten Druckspeicher 51 bzw. aus dem ersten Vorratsbehälter 61 oder mit dem zweiten Brennstoff aus dem zweiten Druckspeicher 52 bzw. aus dem zweiten Vorratsbehälter 62 versorgt werden kann.

Dazu sind für jede Einspritzvorrichtung 4 jeweils zwei Zuführleitungen vorgesehen, nämlich jeweils eine erste Zuführleitung 81, welche die Einspritzvorrichtung 4 mit dem ersten Druckspeicher 51 verbindet, und eine zweite Zuführleitung 82, welche die Einspritzvorrichtung 4 mit dem zweiten Druckspeicher 52 verbindet. Die Strömungsrichtung der Brennstoffe in den Zuführleitungen 81, 82 ist in Fig. 1 durch die Pfeile ohne Bezugszeichen angezeigt.

Ferner ist stromaufwärts jeder Einspritzvorrichtung 4 jeweils eine dieser Einspritzvorrichtung 4 zugeordnete Schalteinrichtung 9, beispielsweise ein Mehrwegeventil, vorgesehen, um die jeweilige Einspritzvorrichtung 4 wahlweise entweder mit dem ersten Druckspeicher 51 oder mit dem zweiten Druckspeicher 52 oder mit keinem der beiden Druckspeicher 51, 52 zu verbinden. Mittels der Schalteinrichtung 9 ist es also möglich, die jeweilige Einspritzvorrichtung 4 und damit den jeweiligen Zylinder 2 entweder mit dem ersten Brennstoff oder mit dem zweiten Brennstoff zu versorgen, oder die Brennstoffzufuhr ganz zu unterbinden, sodass diesem Zylinder 2 gar kein Brennstoff zugeführt wird.

Wie dies in Fig. 1 dargestellt ist, führt jeweils eine erste Zuführleitung 81 und eine zweite Zuführleitung 82 von dem ersten Druckspeicher 51 bzw. von dem zweiten Druckspeicher 52 an den Eingang der Schalteinrichtung 9, deren Ausgang dann jeweils mit einer Einspritzvorrichtung 4 verbunden ist. Es versteht sich, dass die Schalteinrichtung 9 jeweils auch direkt an der Einspritzvorrichtung 4 vorgesehen sein kann oder in die Einspritzvorrichtung 4 integriert sein kann.

Natürlich ist es auch möglich, dass für jede erste Zuführleitung 81 und für jede zweite Zuführleitung 82 jeweils ein schaltbares Absperrventil vorgesehen ist, sodass jede Zuführleitung 81, 82 individuell geöffnet oder geschlossen werden kann. Diese Absperrventile können beispielsweise an dem ersten Druckspeicher 51 und an dem zweiten Druckspeicher 52 vorgesehen werden.

Durch das Öffnen eines Absperrventils wird dann eine Strömungsverbindung von dem ersten oder dem zweiten Druckspeicher 51 oder 52 durch die zugehörige Zuführleitung 81 oder 82 zu der entsprechenden Einspritzvorrichtung 4 geöffnet.

Auch auf diese Weise kann jede Einspritzvorrichtung 4 und damit jeder Zylinder 2 jeweils entweder mit dem ersten Brennstoff oder mit dem zweiten Brennstoff oder gar nicht mit Brennstoff versorgt werden.

Erfindungsgemäss werden nun mehrere Zylinder 2 einer ersten Gruppe von Zylindern 2 oder einer zweiten Gruppe von Zylindern 2 zugeordnet. Dabei umfassen die erste Gruppe und die zweite Gruppe jeweils mindestens einen der Zylinder 2. Der ersten Gruppe von Zylindern 2 wird der erste Brennstoff aus dem ersten Druckspeicher 51 bzw. aus dem ersten Vorratsbehälter 61 zugeführt und der zweiten Gruppe von Zylindern wird der zweite Brennstoff aus dem zweiten Druckspeicher 52 bzw. aus dem zweiten Vorratsbehälter 62 zugeführt. Auf diese Weise wird der Grossdieselmotor gleichzeitig mit zwei verschiedenen Brennstoffen betrieben. Während in den Zylindern 2 der ersten Gruppe der erste Brennstoff verbrannt wird, wird gleichzeitig in den Zylindern 2 der zweiten Gruppe der zweite Brennstoff verbrannt, sodass der Grossdieselmotor 1 simultan mit zwei unterschiedlichen Brennstoffen betrieben wird.

Vorzugsweise wird jeder der Zylinder 2 des Grossdieselmotors 1 der ersten oder der zweiten Gruppe von Zylindern zugeordnet, sodass der Grossdieselmotor 1 mit allen seinen Zylindern 2 betrieben wird. Dies ist aber keinesfalls notwendig. Es ist durchaus auch möglich, beispielsweise bei geringeren Lastanforderungen (Teillast), einen oder mehrere Zylinder 2 abzuschalten, sodass der Grossdieselmotor 1 mit einer Anzahl von Zylindern 2 betrieben wird, die kleiner ist als die Gesamtanzahl der Zylinder 2 des Grossdieselmotors 1.

Grundsätzlich ist die Zuteilung der Zylinder 2 in die erste oder die zweite Gruppe flexibel und kann insbesondere auch während des Betriebs des Grossdieselmotors 1 geändert werden, beispielsweise wenn ein von dem Grossdieselmotor 1 angetriebenes Schiff in ein Gebiet einfährt, in dem andere oder schärfere Abgasgrenzwerte gelten, oder wenn es zu einer Änderung des Lastbereichs kommt, in dem der Grossdieselmotors betrieben wird. Auch wirtschaftliche Aspekte können berücksichtigt werden, so kann für den jeweils günstigeren der beiden Brennstoffe die Anzahl der Zylinder in derjenigen Gruppe erhöht werden, die mit diesem günstigeren Brennstoff betrieben wird.

Auch aus Sicherheitsgründen ist es bevorzugt, dass jeder der Zylinder 2 des Grossdieselmotors 1 wahlweise der ersten oder der zweiten Gruppe von Zylindern zugeordnet werden kann, und dass diese Zuordnung für jeden Zylinder 2 insbesondere auch während des Betriebs des Grossdieselmotors 1 beliebig gewechselt werden kann.

Eine bevorzugte Massnahme besteht darin, dass man mindestens einen, vorzugsweise mehrere, Zylinder 2 auswählt, der bzw. die immer oder zumindest ganz überwiegend der ersten Gruppe zugeordnet wird/werden. Auch kann es vorteilhaft sein, wenn man zusätzlich oder alternativ mindestens einen, vorzugsweise mehrere, Zylinder 2 auswählt, der bzw. die immer oder zumindest ganz überwiegend der zweiten Gruppe zugeordnet wird/werden.

Rein beispielhaft kann man bei einem Grossdieselmotor 1, der zwölf Zylinder hat, fünf Zylinder 2 auswählen, die immer oder zumindest überwiegend, mit dem ersten Brennstoff betrieben werden, also der ersten Gruppe zugeordnet werden. Alternativ oder ergänzend kann man z. B. vier Zylinder 2 auswählen bzw. festlegen, die immer oder zumindest überwiegend mit dem zweiten Brennstoff betrieben werden, also der zweiten Gruppe zugeordnet werden.

Diese Massnahme, bestimmte Zylinder 2 immer oder zumindest überwiegend derselben Gruppe zuzuordnen, hat den Vorteil, dass diese Zylinder 2 einschliesslich ihrer Einspritzvorrichtungen 4 für denjenigen Brennstoff optimiert werden können, mit dem diese Gruppe betrieben wird.

Wird beispielsweise als erster Brennstoff Schweröl verwendet, so können diejenigen Zylinder 2, die immer oder zumindest überwiegend der ersten Gruppe zugeordnet werden, für die Verbrennung von Schweröl optimiert werden. Das heisst beispielsweise, dass die zugehörigen Einspritzvorrichtungen 4 inklusive der Einspritzdüsen so ausgestaltet werden, z. B. hinsichtlich der Geometrie der Einspritzdüsen, dass sie besonders gut für Schweröl als Brennstoff geeignet sind.

Auch ist es möglich, für diejenigen Zylinder 2, die immer oder zumindest überwiegend derselben Gruppe zugeordnet sind, das tribologische System im Zylinder 2, welches den Kolben 3 mit dem oder den Kolbenring(en) und den Gegenlaufpartner, also die Lauffläche des Zylinders 2 oder des Liners, umfasst, für denjenigen Brennstoff zu optimieren, mit dem diese (erste oder zweite) Gruppe betrieben wird. Diese Optimierung kann beispielsweise die Anzahl, die Geometrie, das Material oder die Beschichtung der Kolbenringe betreffen, die Schmiermittelversorgung (z. B. Anzahl und Anordnung der Schmierstellen im Zylinder), das Schmiermittel selbst oder andere Elemente. Die fixierte oder näherungsweise fixierte Zuordnung von Zylindern 2 in die erste Gruppe oder in die zweite Gruppe hat insbesondere, wenn einer der beiden Brennstoffe ein kritischer Brennstoff ist, den Vorteil, dass man die fest oder überwiegend fest zugeordneten Zylinder 2 quasi schonen kann, indem man sie gar nicht oder nur sehr selten mit dem kritischen Brennstoff betreibt.

Mit einem kritischen Brennstoff ist dabei insbesondere ein solcher gemeint, der einen hohen Verschleiss in der Einspritzvorrichtung 4 oder im Zylinder 2 oder in den Versorgungskomponenten verursacht, beispielsweise, weil der Brennstoff sehr abrasiv ist. Als Beispiel seien hier Suspensionen (Schlamm, Slurry) genannt, insbesondere Kohlenstaub-Wasser-Suspensionen, die zum Betreiben von Grossdieselmotoren verwendet werden können.

Ist also beispielsweise der zweite Brennstoff eine Kohlenstaub-Wasser Suspension, so kann man einige Zylinder 2 bestimmen, die immer oder zumindest überwiegend der ersten Gruppe zugeordnet werden. Diese Zylinder 2 werden dann gar nicht oder nur sehr selten mit der Kohlenstaub-Wasser Suspension betrieben, sondern werden zumindest überwiegend mit dem ersten Brennstoff betrieben. So lassen sich diese Zylinder 2 schonen und unterliegen einem deutlich geringeren Verschleiss. Dieses Schonen der Zylinder 2 stellt auch unter Sicherheitsaspekten einen Vorteil dar.

Eine weitere Variante besteht darin, dass man Zylinder 2 auswählt, die immer oder überwiegend der ersten Gruppe zugeordnet werden, dass man zusätzlich andere Zylinder 2 auswählt, die immer oder überwiegend der zweiten Gruppe zugeordnet werden, wobei die Anzahl der fest oder quasi fest zugeordneten Zylinder 2 kleiner ist als die Gesamtzahl der Zylinder 2, und dass man die verbleibenden, nicht fest zugeordneten Zylinder bedarfsweise der ersten oder der zweiten Gruppe oder keiner Gruppe zuordnet. "Keiner Gruppe zugeordnet" bedeutet, dass dieser Zylinder nicht mit einem Brennstoff betrieben wird.

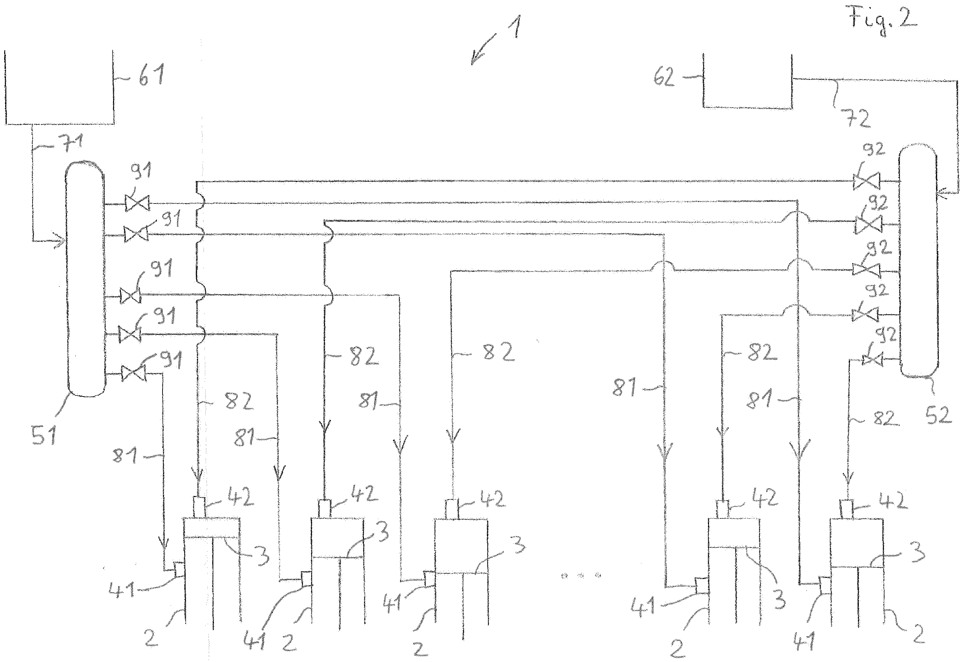

Fig. 2 zeigt eine schematische Darstellung eines zweiten Ausführungsbeispiels eines erfindungsgemässen Grossdieselmotors 1 zur Durchführung eines zweiten Ausführungsbeispiels eines erfindungsgemässen Verfahrens. Im Folgenden wird nur auf die Unterschiede zum ersten Ausführungsbeispiel eingegangen. Die vorangehenden Erläuterungen bezüglich des ersten Ausführungsbeispiels gelten in gleicher oder in sinngemäss gleicher Weise auch für das zweite Ausführungsbeispiel. Auch die Bezugszeichen haben die gleiche Bedeutung und bezeichnen die gleichen oder sinngemäss gleichen Komponenten wie im Zusammenhang mit dem ersten Ausführungsbeispiel erläutert.

Bei dem zweiten Ausführungsbeispiel sind zwei Einspritzsystem vorgesehen, die im Wesentlichen unabhängig voneinander sind. Dazu sind an jedem Zylinder 2 jeweils zwei Einspritzvorrichtungen 41, 42 vorgesehen, nämlich eine erste Einspritzvorrichtung 41 zum Einbringen des ersten Brennstoffs in den jeweiligen Zylinder 2, und eine zweite Einspritzvorrichtung 42 zum Einbringen des zweiten Brennstoffs in den jeweiligen Zylinder 2. Jede erste Einspritzvorrichtung 41 ist jeweils über eine erste Zuführleitung 81 mit dem ersten Druckspeicher 51 bzw. mit dem ersten Vorratsbehälter 61 verbunden, und jede zweite Einspritzvorrichtung 42 ist jeweils über eine zweite Zuführleitung mit dem zweiten Druckspeicher 52 bzw. mit dem zweiten Vorratsbehälter 62 verbunden. Für jede erste Zuführleitung 81 ist bei diesem Ausführungsbeispiel am ersten Druckspeicher 51 ein erstes schaltbares Absperrventil 91 vorgesehen, mit welchem die Strömungsverbindung von dem ersten Druckspeicher 51 durch die jeweilige erste Zuführleitung 81 zu der jeweiligen ersten Einspritzvorrichtung 41 geöffnet oder verschlossen werden kann. Für jede zweite Zuführleitung 82 ist am zweiten Druckspeicher 52 ein zweites schaltbares Absperrventil 92 vorgesehen, mit welchem die Strömungsverbindung von dem zweiten Druckspeicher 52 durch die jeweilige zweite Zuführleitung 82 zu der jeweiligen zweiten Einspritzvorrichtung 42 geöffnet oder verschlossen werden kann.

Auf diese Weise kann auch bei dem zweiten Ausführungsbeispiel jeder der Zylinder 2 wahlweise mit dem ersten Brennstoff oder mit dem zweiten Brennstoff betrieben werden.

Das in Fig. 2 dargestellte zweite Ausführungsbeispiels eignet sich insbesondere -aber nicht nur- für solche Fälle, bei denen einer der beiden Brennstoffe ein gasförmiger Brennstoff, beispielsweise ein Erdgas (LNG) ist, und der andere Brennstoff ein flüssiger Brennstoff, beispielsweise Schweröl oder MSAR. Mit beispielhaftem Charakter wird auf den Fall Bezug genommen, dass der erste Brennstoff ein Gas ist. Das erste Einspritzsystem mir den ersten Einspritzvorrichtungen 41 ist dann in an sich bekannter Weise als ein Gaseinspritzsystem ausgestaltet. Vorzugsweise sind dann die ersten Einspritzvorrichtungen 41 bzw. die zu ihnen gehörenden Einspritzdüsen seitlich am jeweiligen Zylinder 2, also an der Zylindermantelfläche angeordnet, beispielsweise auf einer Höhe, die etwa in der Mitte zwischen dem oberen und dem unteren Totpunkt des Kolbens liegt.

Die Einspritzdüsen der ersten Einspritzvorrichtungen 41 sind dann als Gaseinlassdüsen ausgestaltet, welche im Zylinderliner angeordnet sind, sodass das Gas in den Zylinder 2 einbringbar ist und sich dort mit der Spülluft zu dem zündfähigen Luft-Gas Gemisch vermischt.

Es ist natürlich aber auch möglich, eine oder mehrere Gaseinlassdüsen am Zylinderkopf bzw. am Zylinderdeckel vorzusehen, sodass die Zuführung des Gases in den Zylinder vom Zylinderkopf aus erfolgt und sich das Gas dann mit der Spülluft vermischt.

Falls der erste Brennstoff, wie hier beschrieben, ein gasförmiger Brennstoff ist, ist das zugehörige Einspritzsystem mit den ersten Einspritzvorrichtungen 41 vorzugsweise als ein Niederdruck (low pressure) - Gassystem ausgestaltet. Damit ist gemeint, dass der Einspritzdruck, mit welchem der gasförmige erste Brennstoff in den Brennraum des jeweiligen Zylinders 2 eingespritzt wird, höchsten 100 bar (10 MPa) beträgt. Vorzugsweise ist der Einspritzdruck maximal 50 bar (5 MPa) und besonders bevorzugt höchstens 20 bar (2 MPa).

Es wird also ein möglichst geringer Gasdruck für die Einspritzung des gasförmigen ersten Brennstoffs in den Brennraum angestrebt. So kann der maximale Einspritzdruck für den gasförmigen ersten Brennstoff beispielsweise auch nur 15 bar oder sogar noch weniger betragen.

Ein möglichst geringer Einspritzdruck des gasförmigen ersten Brennstoffs hat natürlich unter Sicherheitsaspekten grosse Vorteile. Zudem muss das gesamte Gaszuführsystem nur für solche vergleichsweise geringen Betriebsdrücke ausgelegt sein, was insbesondere im Hinblick auf die Abdichtung des Systems, die auftretenden Kräfte, sowie die Druckbelastung der gasführenden Leitungen bzw. ihrer Verbindungen besonders vorteilhaft ist. Auch bedarf es keiner besonderen Hochdruckkompressoren, mit denen der gasförmige ersten Brennstoff wie im Falle von Hochdrucksystemen auf einen Betriebsdruck von beispielsweise 350 bar oder noch höher komprimiert werden muss, was auch unter wirtschaftlichen und Kostenaspekten vorteilhaft ist.

Gerade im Hinblick auf einen möglichst geringen Einspritzdruck für den gasförmigen ersten Brennstoff ist es daher auch bevorzugt, wenn der gasförmige erste Brennstoffs an der Zylinderwand eingebracht wird. Hierdurch lässt es sich nämlich erreichen, dass der Kompressionsdruck im Zylinder 2, gegen den der gasförmige erste Brennstoff ja eingespritzt werden muss, noch vergleichsweise gering ist. Wenn bei einem längsgespülten Zweitakt-Grossdieselmotor der Kolben 3 bei der Abwärtsbewegung die Spülluftschlitze freigibt, beginnt die Spülluft in den Zylinder einzuströmen. Dies geschieht solange, bis der Kolben 3 bei seiner anschliessenden Aufwärtsbewegung die Spülluftschlitze wieder vollkommen verschlossen hat. Erst wenn dann - in der Regel nach dem Verschliessen der Spülluftschlitzedas Auslassventil geschlossen wird und vollkommen verschlossen ist, beginnt durch die Aufwärtsbewegung des Kolbens 3 der Kompressionsdruck im Zylinder 2 zu steigen, bis er seinen maximalen Wert erreicht, etwa dann, wenn der Kolben 3 im oberen Totpunkt ist.

Daher erfolgt das Einbringen des gasförmigen ersten Brennstoffs vorzugsweise dann, wenn noch kein besonders grosser Kompressionsdruck im Zylinder 2 herrscht und besonders bevorzugt beginnt das Einbringen des Brennstoffs bevor das Auslassventil geschlossen ist.

Es versteht sich, dass das erfindungsgemässe Verfahren zum Betreiben eines Grossdieselmotors 1 auch mit anderen, bekannten Betriebsverfahren kombinierbar ist. Das heisst, das erfindungsgemässe gleichzeitige Betreiben des Grossdieselmotors 1 mit zwei unterschiedlichen Brennstoffen, nämlich das gleichzeitige Betreiben der Zylinder 2 der ersten Gruppe mit dem ersten Brennstoff und der Zylinder 2 der zweiten Gruppe mit dem zweiten Brennstoff, muss nicht ständig verwendet werden. Es ist beispielsweise durchaus auch möglich, den Grossdieselmotor 1 zeitweise nur mit einem der beiden Brennstoffe zu betreiben. Das erfindungsgemässe Verfahren kann also insbesondere auch nur zeitweise verwendet werden, in dem Sinne, dass der Grossdieselmotor 1 zeitweise nur mit dem ersten oder nur mit dem zweiten Brennstoff betrieben wird und zeitweise gemäss dem erfindungsgemässen Verfahren mit beiden Brennstoffen gleichzeitig betrieben wird.

Daher wird durch die Erfindung ferner ein Betriebsverfahren für einen Grossdieselmotor 1 vorgeschlagen, welches einen ersten und einen zweiten Betriebsmodus umfasst, wobei während des Betriebs der Grossdieselmotor 1 wahlweise bzw. wechselweise in dem ersten Betriebsmodus oder in dem zweiten Betriebsmodus betrieben werden. Im ersten Betriebsmodus wird der Grossdieselmotor 1 gemäss dem vorangehend beschriebenen erfindungsgemässen Verfahren betrieben. Der Betrieb im zweiten Betriebsmodus umfasst drei Möglichkeiten:, nämlich, dass der aktuellen ersten Gruppe kein Zylinder 2 zugeordnet wird, der Grossdieselmotor also nur mit dem zweiten Brennstoff betrieben wird, oder, dass der zweiten Gruppe kein Zylinder 2 zugeordnet wird, der Grossdieselmotor 1 also nur mit dem ersten Brennstoff betrieben wird, oder, dass weder der ersten noch der zweiten Gruppe ein Zylinder 2 zugeordnet wird, der Grossdieselmotor 1 also ohne Brennstoff betrieben wird. Bei der letztgenannten Möglichkeit wird dann mindestens in einem Zylinder 2 der Kolben 3 durch Beaufschlagung mit einem unter Druck stehenden Fluid, insbesondere mit Druckluft, bewegt. Diese Möglichkeit stellt realisiert einen emissionsfreien Betrieb, weil keinem Zylinder 2 ein Brennstoff zugeführt wird und der Grossdieselmotor 1 nur mit Druckluft betrieben wird. Druckluft steht bei einem Grossdieselmotor 1 üblicherweise immer zur Verfügung, weil ein Grossdieselmotor typischerweise mit Druckluft gestartet wird. Der reine Luftbetrieb, bei welchem keinem Zylinder 2 Brennstoff zugeführt wird, sondern der Kolben 3 in mindestens einem Zylinder oder die Kolben 3 in mehreren oder in allen Zylindern 2 durch Beaufschlagung mit Druckluft, also ohne Verbrennungsprozess, bewegt wird/werden, kann beispielsweise verwendet werden, wenn das von dem Grossdieselmotor angetriebene Schiff sich in einem Hafen bewegt oder manövriert. Beim Fahren im Hafen kann der Grossdieselmotor 1 dann beispielsweise ohne Brennstoffzufuhr in die Zylinder 2 nur mit Druckluft betrieben werden und nach dem Verlassen des Hafens wird dann auf eine andere Betriebsart umgestellt, bei welcher in mehreren oder in allen Zylindern Brennstoff verbrannt wird.

Es ist natürlich auch möglich, wenn einer oder einige Zylinder 2 der ersten Gruppe zugeordnet ist/sind, und/oder, wenn einer oder mehrere Zylinder 2 der zweiten Gruppe zugeordnet ist/sind, in einem oder mehreren derjenigen Zylinder 2, die aktuell keiner der beiden Gruppen zugeordnet sind, den Kolben 3 durch Beaufschlagung mit Druckluft zu bewegen.

## Patentansprüche

1. Verfahren zum Betreiben eines Grossdieselmotors, der mit zwei unterschiedlichen Brennstoffen betreibbar ist, der eine Mehrzahl von Zylindern (2) aufweist, und der einen ersten sowie einen zweiten Vorratsbehälter (61, 62) für jeweils einen der Brennstoffe umfasst, bei welchem Verfahren mindestens ein Zylinder (2) einer ersten Gruppe von Zylindern (2) zugeordnet wird, sowie mindestens ein Zylinder (2) einer zweiten Gruppe von Zylindern (2), und bei welchem der ersten Gruppe von Zylindern (2) ein erster Brennstoff aus dem ersten Vorratsbehälter (61) zugeführt wird, während der zweiten Gruppe von Zylindern (2) ein zweiter Brennstoff aus dem zweiten Vorratsbehälter (62) zugeführt wird.

2. Verfahren nach Anspruch 1, wobei ein erster Druckspeicher (51) vorgesehen ist, dem aus dem ersten Vorratsbehälter (61) der erste Brennstoff zugeführt wird, oder ein zweiter Druckspeicher (52), dem aus dem zweiten Vorratsbehälter (62) der zweite Brennstoff zugeführt wird, und wobei der ersten Gruppe von Zylindern(2) der erste Brennstoff aus dem ersten Druckspeicher (51) zugeführt wird, oder der zweiten Gruppe von Zylindern (2) der zweite Brennstoff aus dem zweiten Druckspeicher (52) zugeführt wird.

3. Verfahren nach einem der vorangehenden Ansprüche, wobei jeder Zylinder (2) der ersten Gruppe oder der zweiten Gruppe zugeordnet wird.

4. Verfahren nach einem der vorangehenden Ansprüche, bei welchem die Zuordnung der Zylinder (2) zu der ersten Gruppe bzw. zu der zweiten Gruppe während des Betriebs des Grossdieselmotors unverändert bleibt.

5. Verfahren nach einem der vorangehenden Ansprüche, bei welchem die Zuordnung zu der ersten Gruppe bzw. zu der zweiten Gruppe für mindestens einen Zylinder (2) während des Betriebs des Grossdieselmotors verändert wird.

6. Verfahren nach einem der vorangehenden Ansprüche, bei welchem jeder Zylinder (2) eine Einspritzvorrichtung (4) zum Einbringen von Brennstoff in den Zylinder umfasst, wobei die jeweilige Einspritzvorrichtung (4) aus dem ersten Vorratsbehälter (61) gespeist wird, falls der zugehörige Zylinder (2) der ersten Gruppe zugeordnet ist, oder aus dem zweiten Vorratsbehälter (62) gespeist wird, falls der zugehörige Zylinder (2) der zweiten Gruppe zugeordnet ist.

7. Verfahren nach einem der vorangehenden Ansprüche, wobei die Zylinder (2) der ersten Gruppe an den ersten Brennstoff angepasst sind.

8. Verfahren nach einem der vorangehenden Ansprüche, wobei die Zylinder (2) der zweiten Gruppe an den zweiten Brennstoff angepasst sind.

9. Verfahren nach einem der vorangehenden Ansprüche, bei welcher der erste Brennstoff mit einer ersten Einspritzvorrichtung (41) in den Zylinder (2) eingebracht wird, und der zweite Brennstoff mit einer zweiten Einspritzvorrichtung (42) in den Zylinder (2) eingebracht wird.

10. Verfahren nach einem der vorangehenden Ansprüche, bei welchem der Grossdieselmotor mit zwei unterschiedlichen flüssigen Brennstoffen betrieben wird.

11. Verfahren nach einem der vorangehenden Ansprüche, bei welchem einer der Brennstoffe ein gasförmiger Brennstoff ist.

12. Betriebsverfahren für einen Grossdieselmotor, bei welchem der Grossdieselmotor in einem ersten Betriebsmodus oder in einem zweiten Betriebsmodus betrieben wird, wobei während des Betriebs des Grossdieselmotors vom ersten in den zweiten Betriebsmodus gewechselt wird, oder vom zweiten in den ersten Betriebsmodus gewechselt wird, und wobei
der Grossdieselmotor im ersten Betriebsmodus mit einem Verfahren gemäss einem der vorangehenden Ansprüche betrieben wird, und
im zweiten Betriebsmodus
- der ersten Gruppe kein Zylinder (2) zugeordnet wird, oder
- der zweiten Gruppe kein Zylinder (2) zugeordnet wird, oder
- keiner der beiden Gruppen ein Zylinder zugeordnet wird, und mindestens in einem Zylinder (2) der Kolben (3) durch Beaufschlagung mit einem unter Druck stehenden Fluid, insbesondere Druckluft, bewegt wird.

13. Grossdieselmotor, welcher mit einem Verfahren gemäss einem der Ansprüche 1-11 oder mit einem Betriebsverfahren gemäss Anspruch 12 betrieben wird.

14. Grossdieselmotor nach Anspruch 13, welcher zur Verbrennung eines Gases und zur Verbrennung eines flüssigen Brennstoffs ausgestaltet ist.

15. Grossdieselmotor nach einem der Ansprüche 13-14, ausgestaltet als längsgespülter Zweitakt-Grossdieselmotor.
